# FASCICULE DE BREVET EUROPEEN

(11) **EP 1 843 439 B1**
(45) Date de publication et mention de la délivrance du brevet: **10.10.2012**
(21) Numéro de dépôt: 07290286.9
(22) Date de dépôt: 06.03.2007
(51) Int. Cl.: H02G 3/04, H02G 3/06

(54) **Accessoire de raccordement pour conduit et ensemble comprenant un conduit recevant un tel accessoire**
Verbindungszubehörteil für eine Leitung und Einheit, die eine Leitung umfasst, die ein solches Zubehörteil aufnimmt
Connection accessory for a conduit and assembly comprising a conduit including such an accessory

(30) Priorité: 07.04.2006 FR 0603084
(43) Date de publication de la demande: 10.10.2007
(73) Titulaire: Legrand France, 87000 Limoges (FR); Legrand SNC, 87000 Limoges (FR)
(72) Inventeur: Bellanger, Jérôme, 72000 Le Mans (FR); Decore, Raphaël, 72140 Sillé-le-Guillaume (FR)
(74) Mandataire: Orsini, Fabienne

(56) Documents cités:
- FR-A1- 2 828 723
- US-A- 5 753 855
- US-A1- 2004 238 196

## Description

La présente invention concerne un accessoire de raccordement à rapporter sur une extrémité d'au moins un conduit, cet accessoire comportant deux demi-coques délimitant intérieurement un logement, les parois des deux demi-coques étant adaptées à sensiblement s'appliquer sur la face externe de l'extrémité coupée de chaque conduit en l'entourant complètement.

Un tel accessoire est décrit dans le document FR-A-2 828 723. Celui ci comporte en outre des moyens de montage pour être monté sur un conduit sur une seule des ses demi-coques.

L'invention trouve une application particulièrement avantageuse dans la réalisation d'un accessoire de jonction, d'un accessoire d'angle intérieur ou extérieur ou encore d'un accessoire d'angle plat pour goulottes électriques.

Toutefois l'invention peut être également appliquée à tout type d'accessoire pour conduit ou canalisation.

### ARRIERE-PLAN TECHNOLOGIQUE

Par ailleurs on connaît aussi les documents DE 100 19 005, WO03/074918, FR 2 847 963, FR 2 847 964, FR 2 753 843qui décrivent des accessoires dans lesquels deux demi-coques comprennent des moyens de montage destinés à coopérer les uns avec les autres pour solidariser ces deux demi-coques entre elles.

### OBJET DE L'INVENTION

Par rapport à l'état de la technique précité, la présente invention propose un accessoire de raccordement dans lequel chacune des deux demi-coques comporte des moyens de montage pour être montée sur ledit conduit indépendamment de l'autre demi-coque.

Ainsi, avantageusement grâce à l'invention, les deux demi-coques de l'accessoire de raccordement peuvent être montées ou démontées séparément l'une de l'autre sur les conduits à raccorder.

Lorsqu'il s'agit de conduits électriques à raccorder, l'installateur peut choisir de monter tout d'abord une des deux demi-coques de l'accessoire sur les socles des conduits, lors de leur pose en saillie sur la paroi, puis de monter l'autre demi-coque après fermeture desdits conduits. Il peut également choisir de monter les deux demi-coques sur lesdits conduits fermés après que ceux-ci aient été fixés à la paroi.

De même, en cas de besoin, pour ajouter des conducteurs ou des câbles électriques dans lesdits conduits électriques raccordés au moyen de cet accessoire de raccordement, l'installateur pourra aisément retirer uniquement la demi-coque formant couvercle de l'accessoire (en laissant en place l'autre demi-coque formant le fond) pour introduire par une extrémité ouverte d'un des conduits les conducteurs ou câbles électriques dans ces derniers.

D'autres caractéristiques avantageuses et non limitatives de l'accessoire de raccordement selon l'invention sont les suivantes :
- lesdits moyens de montage comprennent sur chaque demi-coque au moins deux crochets disposés sur au moins deux bords longitudinaux de ladite demi-coque pour faire saillie dans ledit logement, les deux crochets d'une des demi-coques étant décalés axialement par rapport aux deux crochets de l'autre demi-coque ;
- chaque demi-coque comporte au moins deux paires de crochets, les deux crochets de chaque paire disposés sur deux bords longitudinaux ou deux parties de bord longitudinal parallèles étant décalés axialement l'un par rapport à l'autre ;
- lesdits crochets sont conformés pour s'accrocher dans des rainures longitudinales parallèles prévues en renfoncement de la face externe du socle du conduit ;
- chaque demi-coque comporte sur chaque bord longitudinal, entre deux crochets, au moins une nervure longitudinale, chaque nervure longitudinale d'une demi-coque étant destinée à venir se positionner contre une nervure longitudinale de l'autre demi-coque ;
- chaque demi-coque comporte sur chaque bord longitudinal, entre deux crochets, deux nervures longitudinales mises bout à bout et décalées latéralement l'une par rapport à l'autre ;
- chaque demi-coque comporte à chaque extrémité sur deux bords longitudinaux deux dents en vis-à-vis destinées à s'accrocher dans des rainures longitudinales parallèles prévues en renfoncement de la face externe du socle du conduit ;
- les deux demi-coques sont identiques ;
- chaque demi-coque comporte un fond plat à partir duquel s'élèvent deux ailes latérales courbes qui portent en tête lesdits moyens de montage ;
- il constitue un accessoire de jonction avec deux extrémités ouvertes opposées dont les sections s'étendent dans des plans parallèles ;
- il constitue un accessoire de dérivation avec trois extrémités ouvertes disposées en triangle ;
- il constitue un accessoire d'angle intérieur ou d'angle extérieur ou d'angle plat avec deux extrémités ouvertes opposées dont les sections s'étendent dans des plans formant un angle entre eux.

L'invention concerne également un ensemble comportant un accessoire de raccordement tel que précité et un conduit comprenant un socle dont la face externe comprend des moyens de réception desdits moyens de montage.

Selon une caractéristique avantageuse de l'ensemble conforme à l'invention, le socle du conduit comporte des rainures longitudinales parallèles prévues en renfoncement de sa face externe dans lesquelles s'accrochent des crochets prévus sur les bords longitudinaux des demi-coques.

Selon une autre caractéristique avantageuse de l'ensemble conforme à l'invention, il comporte au moins un accessoire de fixation dudit conduit sur une paroi adapté à placer ledit conduit à distance de la paroi.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue en perspective d'un ensemble comportant deux conduits électriques alignés, raccordés entre eux au moyen d'un accessoire de jonction selon l'invention ;
- la figure 2 est une vue en perspective d'un ensemble comportant trois conduits électriques positionnés en T, raccordés entre eux au moyen d'un accessoire de dérivation selon l'invention ;
- la figure 3 est une vue en bout d'un des conduits électriques représentés sur les figures 1 et 2 ;
- la figure 4 est une vue en perspective d'un accessoire de fixation du conduit électrique de la figure 3 ;
- la figure 5 est une vue en coupe selon le plan A-A de la figure 6 ;
- la figure 6 est une de face du côté intérieur d'une demi-coque de l'accessoire de jonction de la figure 1 ;
- les figures 7 et 8 sont des vues en perspective du côté intérieur d'une demi-coque et du côté extérieur de l'autre demi-coque de l'accessoire de jonction de la figure 1 ;
- les figures 9 et 10 sont des vues en perspective du côté extérieur d'une demi-coque et du côté intérieur de l'autre demi-coque de l'accessoire de dérivation de la figure 2 ;
- la figure 11 est une vue en coupe selon le plan B-B de la figure 12 ;
- la figure 12 est une vue de face du côté intérieur d'une demi-coque de l'accessoire de dérivation de la figure 2 ;
- la figure 13 est une vue éclatée en perspective d'un accessoire d'angle plat selon l'invention ;
- la figure 14 est une vue en coupe selon le plan C-C de la figure 15 ;
- la figure 15 est une vue de face du côté intérieur d'une demi-coque de l'accessoire d'angle plat de la figure 13 ;
- les figures 16 et 17 sont des vues en perspective du côté extérieur et du côté intérieur d'un accessoire d'angle intérieur/extérieur sorti de moulage selon l'invention.

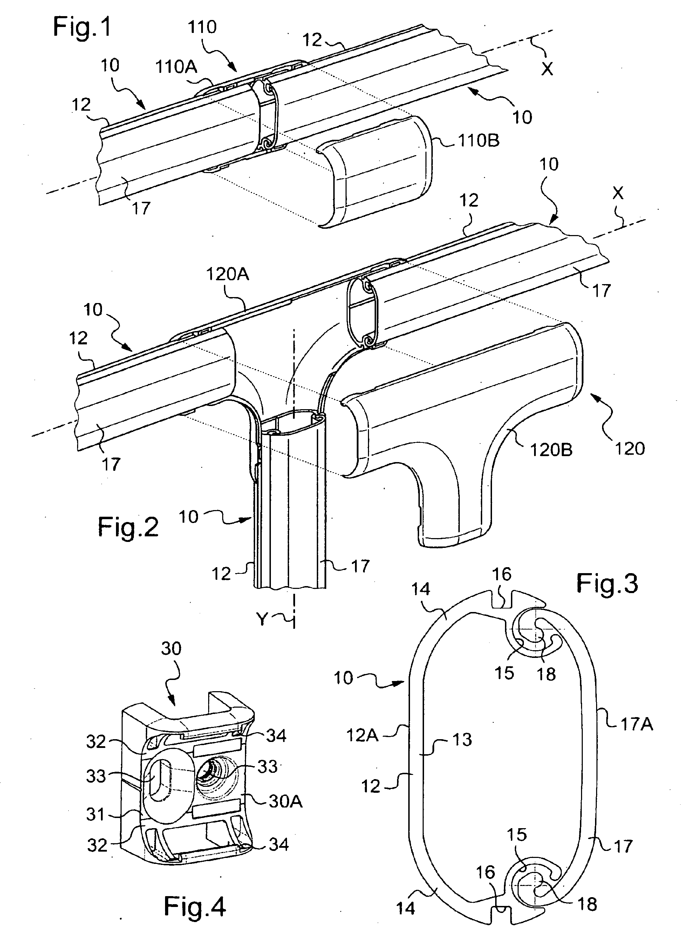

Sur la figure 1, on a représenté deux conduits 10 de cheminement de câbles ou de conducteurs électriques identiques, juxtaposés selon un axe X. Ces deux conduits 10 sont raccordés l'un à l'autre à une de leurs extrémités au moyen d'un accessoire de raccordement 110, appelé communément accessoire de jonction, qui sera décrit plus loin dans le détail.

Sur la figure 2, on a représenté trois conduits 10 de cheminement de câbles ou de conducteurs électriques identiques, placés en T, c'est-à-dire que deux de ces conduits 10 sont juxtaposés selon un axe X et le troisième conduit 10 est positionné entre les deux premiers selon un axe Y perpendiculaire à l'axe X. Ces trois conduits 10 sont raccordés les uns aux autres à une de leurs extrémités au moyen d'un accessoire de raccordement 120, appelé communément accessoire de dérivation, qui sera décrit plus loin dans le détail.

Comme le montre plus particulièrement la figure 3, chaque conduit 10 de cheminement de câbles ou de conducteurs électriques présente une section globalement ovale ou elliptique avec un socle 12 fermé par un couvercle 17.

Le socle 12 comporte un fond 13 plat à partir duquel s'élèvent, sur ses bords longitudinaux parallèles, de courtes ailes latérales 14 à profil courbe portant en tête des retours 15 dirigés l'un vers l'autre. Les retours 15 définissent des gorges de montage par encliquetage de pattes d'encliquetage 18 prévues sur les deux bords longitudinaux du couvercle 17.

Le socle 12 comporte deux rainures longitudinales 16 parallèles en renfoncement de la surface externe 12A de ses ailes latérales 14. Chaque rainure longitudinale 16 est située à proximité du retour 15 porté en tête de l'aile latérale 14 correspondante du socle 12.

Avantageusement, chaque conduit 10 de cheminement de câbles ou de conducteurs électriques est fixé à la paroi correspondante (non représentée) au moyen d'accessoires de fixation 30 dont un exemple est représenté sur la figure 4.

Cet accessoire de fixation 30, appelé communément lyre, comporte une face arrière (non visible sur la figure 4) destinée à reposer sur la paroi de fixation et une face avant 30A qui forme un berceau de réception du socle 12 du conduit 10.

Ce berceau de réception comporte un fond 31 plat recevant le fond 13 plat du socle 12, bordé par deux parois latérales 32 légèrement courbes qui reçoivent les ailes latérales 14 courbes du socle 12.

En tête, les deux parois latérales 32 de la lyre 30 comprennent des retours 34 dirigés l'un vers l'autre qui forment des dents d'accrochage destinées à s'accrocher dans les rainures longitudinales 16 prévues sur la face externe 12A du socle 12 pour maintenir celui-ci dans le berceau de réception de la lyre 30.

Le fond 31 plat du berceau de réception de la lyre 30 est percé de deux orifices 33 traversants, un orifice de section oblongue et un orifice de section circulaire, pour le passage de vis de fixation afin de solidariser la lyre 30 à la paroi.

Avantageusement, les lyres 30 présentent une certaine épaisseur et le conduit 10 qui repose sur celles-ci est placé à distance de la paroi de fixation.

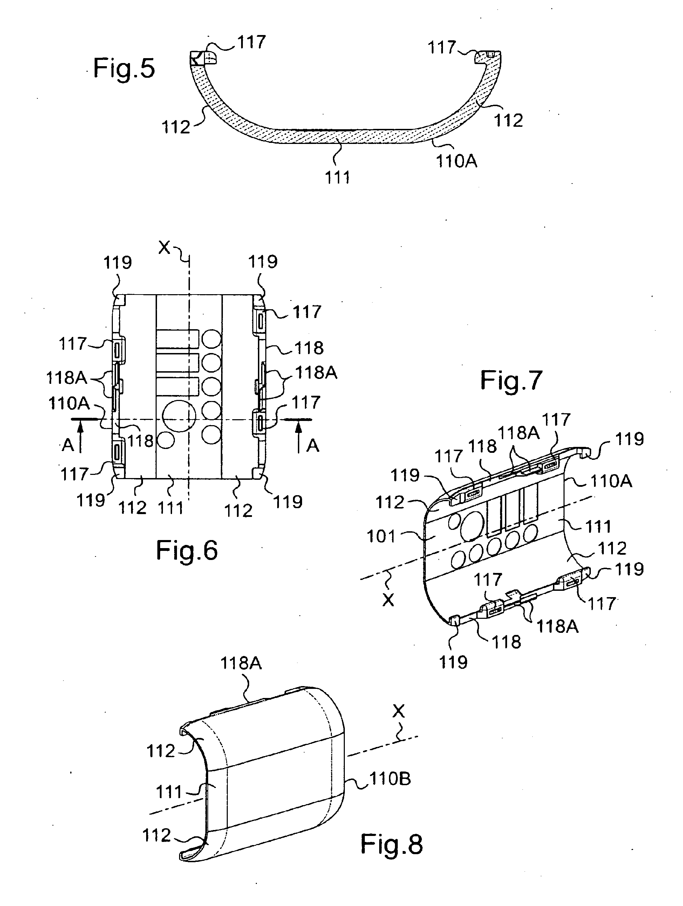

Comme le montrent les figures 1 et 5 à 8, l'accessoire de jonction 110 comporte deux demi-coques 110A,110B rigides, identiques qui s'étendent selon l'axe X. Les deux demi-coques 110A,110B sont destinées à être positionnées l'une sur l'autre.

Une des demi-coques 110A constitue une demi-coque de fond apte à établir une continuité de fond entre les fonds 12 plats des deux conduits 10 juxtaposés tandis que l'autre demi-coque 110B forme une demi-coque de couvercle apte à établir une continuité de couvercle entre les couvercles 17 des deux conduits 10 juxtaposés (voir figure 1).

Chaque demi-coque 110A,110B comporte une paroi de fond centrale 111 plane bordée longitudinalement par des parois latérales 112 courbes.

Chaque demi-coque 110A,110B de l'accessoire de jonction 110 présente des extrémités opposées ouvertes dont les sections s'étendent dans des plans parallèles.

Les parois 111,112 de la demi-coque de fond 110A et de la demi-coque de couvercle 110B de l'accessoire de jonction 110 sont adaptées à sensiblement s'appliquer sur la face externe 12A,17A de l'extrémité coupée droite de chaque conduit 10 en l'entourant complètement.

L'accessoire de jonction 110 forme alors une coque extérieure dure de section globalement ovale ou elliptique qui entoure l'extrémité coupée de chaque conduit 10 juxtaposé (figure 1).

L'accessoire de jonction 110 peut entourer complètement l'extrémité coupée de chaque conduit 10 parce que ceux-ci sont montés à distance de la paroi de fixation en étant fixé aux lyres 30 qui reposent sur cette paroi de fixation.

Ainsi, la demi-coque de fond 110A de l'accessoire de jonction 110 recouvre la face extérieure 12A de l'extrémité coupée du socle 12 de chaque conduit 10 en se logeant dans l'espace libre situé entre le socle 12 et la paroi de fixation (non représentée) (voir figure 1). La demi-coque de couvercle 110B de l'accessoire de jonction 110 recouvre la surface externe 17A de l'extrémité coupée du couvercle 17 de chaque conduit 10 en venant bord à bord de manière étanche avec ladite demi-coque de fond 110A.

Comme le montrent plus particulièrement les figures 1, 5 à 8, chacune des deux demi-coques 110A, 110B de l'accessoire de jonction 110 comporte des moyens de montage pour être montées indépendamment de l'autre demi-coque sur chaque conduit 10.

Selon l'exemple représenté, ces moyens de montage comprennent, sur chaque demi-coque 110A, 110B de l'accessoire de jonction 110, au moins deux crochets 117 disposés sur deux bords longitudinaux 118 parallèles de ladite demi-coque 110A,110B pour faire saillie vers le logement intérieur 101 de l'accessoire de jonction 110, les deux crochets 117 d'une des demi-coques 110A étant décalés axialement (selon l'axe X) par rapport aux deux crochets 117 de l'autre demi-coque 110B.

Chaque demi-coque 110A,110B de l'accessoire de jonction 110 comporte deux paires de crochets 117, les deux crochets 117 de chaque paire disposés sur les deux bords longitudinaux 118 parallèles étant décalés axialement l'un par rapport à l'autre.

Les bords longitudinaux 118 portant les crochets 117 sont les bords libres de tête des parois latérales 112 courbes bordant le fond 111 plat de chaque demi-coque 110A, 110B.

Les crochets 117 sont conformés pour s'accrocher dans les rainures longitudinales 16 parallèles prévues en renfoncement sur la face externe 12A des socles 12 des conduits 10 de cheminement de câbles juxtaposés.

Les crochets 117 s'étendent globalement en équerre par rapport aux parois latérales 112 des demi-coques 110A,110B.

En outre, chaque demi-coque 110A,110B comporte sur chaque bord longitudinal 118, entre deux crochets 117, au moins une nervure longitudinale 118A, chaque nervure longitudinale 118A d'une demi-coque 110A étant destinée à venir se positionner contre une nervure longitudinale 118A de l'autre demi-coque 110B.

Les nervures longitudinales 118A s'étendent en hauteur dans le prolongement des parois latérales 112 des demi-coques 110A, 110B.

Plus particulièrement, ici, chaque demi-coque 110A, 110B comporte sur chaque bord longitudinal 118, entre deux crochets 117, deux nervures longitudinales 118A mises bout à bout et décalées latéralement l'une par rapport à l'autre. Lorsque les deux demi-coques 110A,110B sont positionnées l'une contre l'autre et accrochées aux socles 12 des conduits 10 juxtaposés, les nervures longitudinales 118A des deux demi-coques se superposent pour former un joint étanche.

Par ailleurs, chaque demi-coque 110A,110B comporte à chaque extrémité sur deux bords longitudinaux 118 deux dents 119 en vis-à-vis destinées à s'accrocher dans les rainures longitudinales 16 parallèles prévues en renfoncement de la face externe 12A du socle 12 de chaque conduit 10. Ces dents 119 permettent de renforcer l'accrochage des demi-coques 110A, 110B sur les socles 12 des conduits 10.

Comme le montrent les figures 2 et 9 à 12, l'accessoire de dérivation 120 comporte également deux demi-coques 120A,120B rigides, identiques qui s'étendent selon un T d'axes X et Y perpendiculaires. Les deux demi-coques 120A,120B sont destinées à être positionnées l'une sur l'autre.

Une des demi-coques 120A constitue une demi-coque de fond apte à établir une continuité de fond entre les fonds 12 plats des trois conduits 10 tandis que l'autre demi-coque 120B forme une demi-coque de couvercle apte à établir une continuité de couvercle entre les couvercles 17 des trois conduits 10 (voir figure 2).

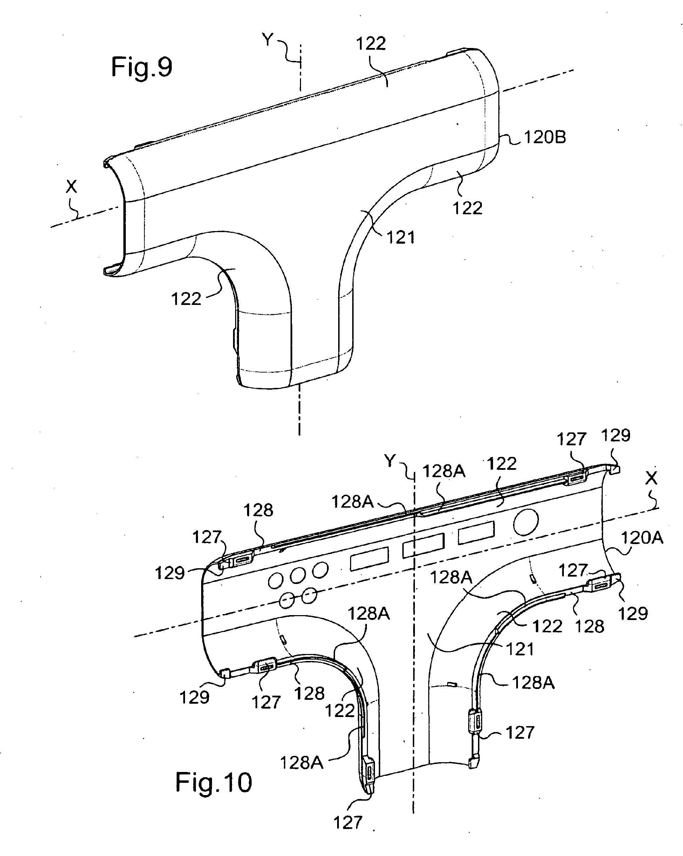

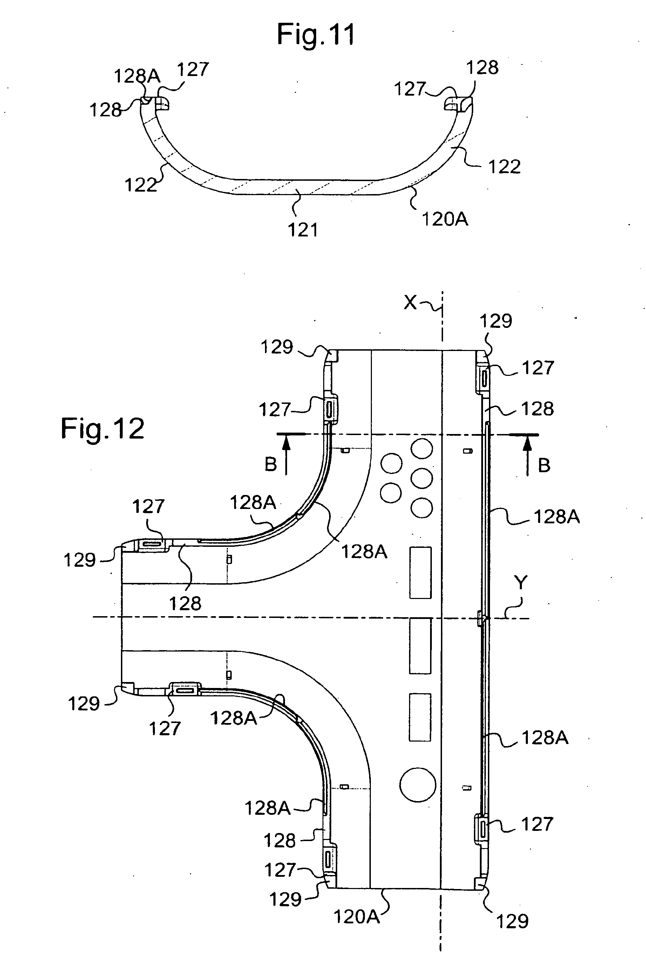

Chaque demi-coque 120A,120B comporte une paroi de fond centrale 121 plane en T bordée longitudinalement par des parois latérales 122 courbes (voir figures 10 et 12).

Chaque demi-coque 120A,120B présente trois bords longitudinaux 128 dont un bord droit et deux bords suivants un rayon de courbure. Ces bords longitudinaux 128 sont les bords libres de tête des parois latérales 122 courbes des demi-coques 120A,120B.

Chaque demi-coque 120A,120B de l'accessoire de dérivation 120 présente trois extrémités ouvertes disposées en triangle, c'est-à-dire que deux extrémités sont opposées et présentent des sections qui s'étendent dans des plans parallèles et la troisième extrémité présente une section qui s'étend dans un plan perpendiculaire aux deux autres (voir figure 10).

Les parois 121,122 de la demi-coque de fond 120A et de la demi-coque de couvercle 120B de l'accessoire de dérivation 120 sont adaptées à sensiblement s'appliquer sur la face externe 12A,17A d'une extrémité coupée droite de chacun des trois conduits 10 en l'entourant complètement (voir figure 2).

L'accessoire de dérivation 120 forme alors une coque extérieure dure de section globalement ovale ou elliptique qui entoure l'extrémité coupée de chaque conduit 10 (figure 1).

L'accessoire de dérivation 120 peut entourer complètement l'extrémité coupée de chaque conduit 10 parce que ceux-ci sont montés à distance de la paroi de fixation en étant fixé aux lyres 30 qui reposent sur cette paroi de fixation.

Ainsi, la demi-coque de fond 120A de l'accessoire de dérivation 120 recouvre la face extérieure 12A de l'extrémité coupée du socle 12 de chaque conduit 10 en se logeant dans l'espace libre situé entre le socle 12 et la paroi de fixation (non représentée) (voir figure 2). La demi-coque de couvercle 120B de l'accessoire de dérivation 120 recouvre la surface externe 17A de l'extrémité coupée du couvercle 17 de chaque conduit 10 en venant bord à bord de manière étanche avec ladite demi-coque de fond 120A.

Comme le montrent plus particulièrement les figures 2, 9 à 12, chacune des deux demi-coques 120A, 120B de l'accessoire de dérivation 120 comporte des moyens de montage pour être montées indépendamment de l'autre demi-coque sur chaque conduit 10.

Selon l'exemple représenté, ces moyens de montage comprennent, sur chaque demi-coque 120A,120B du boîtier de dérivation 120, au moins deux crochets 127 disposés sur au moins deux bords longitudinaux 128 de ladite demi-coque 120A,120B pour faire saillie vers le logement intérieur 121 de l'accessoire de dérivation 120, les deux crochets 127 d'une des demi-coques 120A étant décalés axialement par rapport aux deux crochets 127 de l'autre demi-coque 120B.

Ici, il est prévu sur chacun des trois bords longitudinaux de chaque demi-coque 120A,120B deux crochets 127.

Chaque demi-coque 120A,120B de l'accessoire de dérivation 120 comporte trois tronçons, deux tronçons alignés selon l'axe X et un tronçon perpendiculaire selon l'axe Y. Chaque tronçon de ladite demi-coque 120A,120B comporte, à proximité de son extrémité ouverte, une paire de crochets 127 disposés sur les deux parties de bord longitudinal 128 parallèles dudit tronçon et décalés axialement (selon l'axe X ou selon l'axe Y) l'un par rapport à l'autre (voir figures 10 et 12).

Ces crochets 127 sont conformés comme pour l'accessoire de jonction 110 pour s'accrocher dans les rainures longitudinales 16 parallèles prévues en renfoncement sur la face externe 12A des socles 12 des conduits 10 de cheminement de câbles juxtaposés.

Les crochets 127 s'étendent globalement en équerre par rapport aux parois latérales 122 des demi-coques 120A,120B.

En outre, chaque demi-coque 120A,120B comporte sur chaque bord longitudinal 128, entre deux crochets 127 successifs, au moins une nervure longitudinale 128A, chaque nervure longitudinale 128A d'une demi-coque 120A étant destinée à venir se positionner contre une nervure longitudinale 128A de l'autre demi-coque 120B.

Les nervures longitudinales 128A s'étendent en hauteur dans le prolongement des parois latérales 122 des demi-coques 120A,120B.

Plus particulièrement, ici, chaque demi-coque 120A,120B comporte sur chaque bord longitudinal 128, entre deux crochets 127, deux nervures longitudinales 128A mises bout à bout et décalées latéralement l'une par rapport à l'autre. Lorsque les deux demi-coques 120A,120B sont positionnées l'une contre l'autre et accrochées aux socles 12 des conduits 10 juxtaposés, les nervures longitudinales 128A des deux demi-coques se superposent pour former un joint étanche.

Par ailleurs, chaque demi-coque 120A,120B comporte à chaque extrémité sur deux bords longitudinaux 128 deux dents 129 en vis-à-vis destinées à s'accrocher dans les rainures longitudinales 16 parallèles prévues en renfoncement de la face externe 12A du socle 12 de chaque conduit 10. Ces dents 129 permettent de renforcer l'accrochage des demi-coques 120A,120B sur les socles 12 des conduits 10.

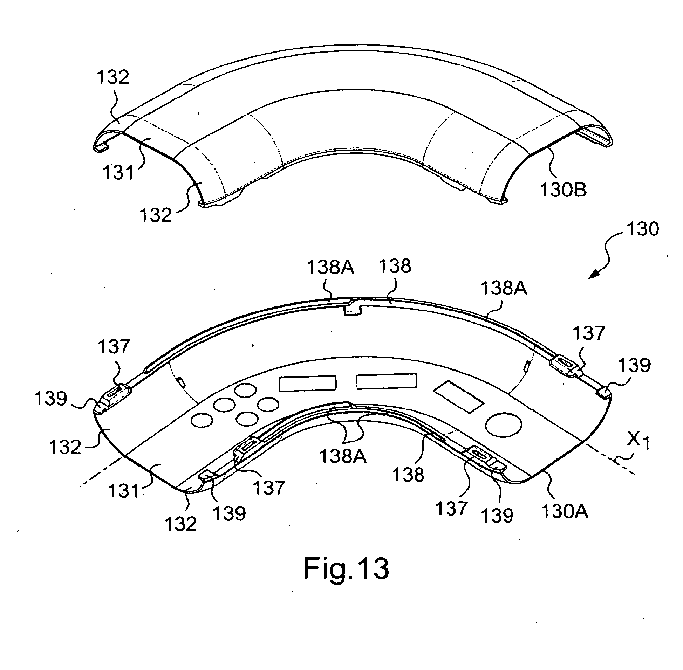

Sur les figures 13 à 15 on a représenté un accessoire d'angle plat 130 qui permet de raccorder les extrémités de deux conduits, en particulier de deux conduits 10 de cheminement de câbles ou de conducteurs électriques, disposés sur un même plan ou une même paroi et formant un angle entre eux.

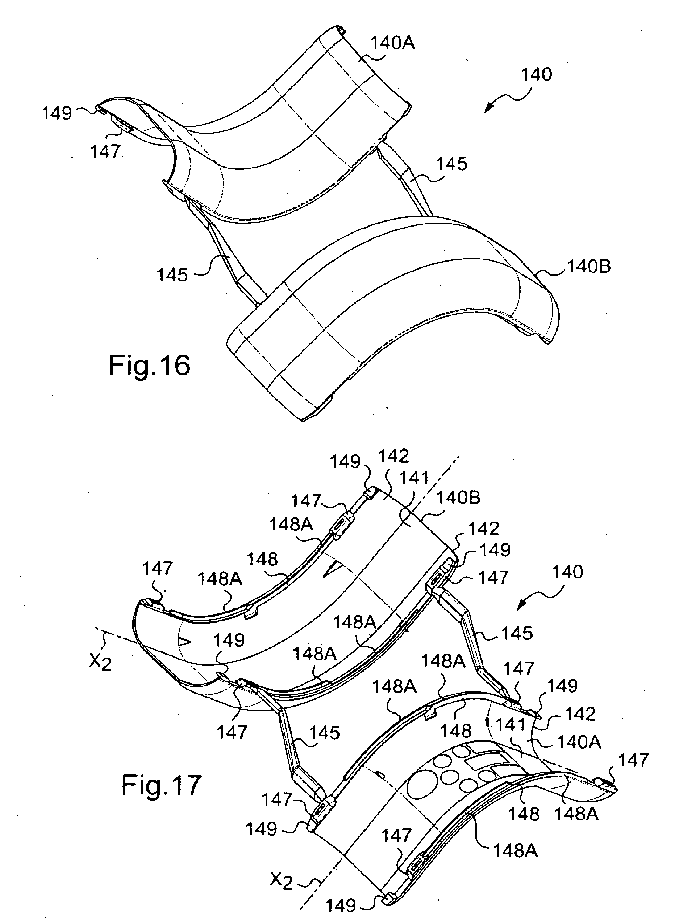

Sur les figures 16 et 17 on a représenté un accessoire d'angle intérieur ou d'angle extérieur 140 qui permet de raccorder les extrémités de deux conduits, en particulier de deux conduits 10 de cheminement de câbles ou de conducteurs électriques, disposés sur deux plans différents formant un angle rentrant ou sortant entre eux.

Comme le montrent les figures 13 à 17, l'accessoire d'angle plat 130 et l'accessoire d'angle intérieur ou d'angle intérieur 140 comportent chacun deux demi-coques 130A,130B ;140A,140B rigides, identiques qui s'étendent selon une ligne de courbure X1 ;X2. Les deux demi-coques 130A,130B ;140A,140B de chaque accessoire sont destinées à être positionnées l'une sur l'autre.

Une des demi-coques 130A ;140A constitue une demi-coque de fond apte à établir une continuité de fond entre les fonds plats des deux conduits en angle tandis que l'autre demi-coque 130B ;140B forme une demi-coque de couvercle apte à établir une continuité de couvercle entre les couvercles des deux conduits en angle.

Chaque demi-coque 130A, 130B ;140A,140B comporte une paroi de fond centrale 131 ;141 plane bordée longitudinalement par des parois latérales 132 ;142 courbes.

Chaque demi-coque 130A,130B ;140A,140B comporte deux bords longitudinaux 138 ;148 parallèles qui suivent la ligne de courbure X1 (pour l'accessoire d'angle plat 130) ou la ligne de courbure X2 (pour l'accessoire d'angle intérieur ou extérieur 140) et présente des extrémités ouvertes opposées dont les sections s'étendent dans des plans formant un angle entre eux (cet angle est égal à l'angle formé entre les plans supports des conduits).

Les bords longitudinaux 138 ;148 sont les bords libres de tête des parois latérales 132 ;142 courbes des demi-coques 130A,130B ;140A, 140B.

Les parois 131,132 ;141,142 de la demi-coque de fond 130A ;140A et de la demi-coque de couvercle 130B ;140B des accessoires d'angle plat 130 et d'angle intérieur ou extérieur 140 sont adaptées à sensiblement s'appliquer sur la face externe de l'extrémité coupée droite de chaque conduit en l'entourant complètement.

Les accessoires d'angle plat 130 et d'angle intérieur ou extérieur 140 forment alors des coques extérieures dures de section globalement ovale ou elliptique qui sont destinées à entourer l'extrémité coupée de chaque conduit en angle.

Les accessoires d'angle plat 130 et d'angle intérieur ou extérieur 140 peuvent entourer complètement l'extrémité coupée de chaque conduit parce que ceux-ci sont montés à distance de la paroi de fixation en étant fixés aux lyres qui reposent sur cette paroi de fixation.

Ainsi, la demi-coque de fond 130A ;140A est adaptée à recouvrir la face extérieure de l'extrémité coupée du socle de chaque conduit en se logeant dans l'espace libre situé entre le socle et la paroi de fixation (non représentée). La demi-coque de couvercle 130B ;140B est adaptée à recouvrir la surface externe de l'extrémité coupée du couvercle de chaque conduit en venant bord à bord de manière étanche avec ladite demi-coque de fond 130A ;140A.

Comme le montrent plus particulièrement les figures 13 à 17, chacune des deux demi-coques 130A, 130B 140A, 140B de l'accessoire d'angle plat 130 et de l'accessoire d'angle intérieur ou extérieur 140 comporte des moyens de montage pour être montées indépendamment de l'autre demi-coque sur chaque conduit 10.

Selon l'exemple représenté, ces moyens de montage comprennent, sur chaque demi-coque 130A,130B ;140A,140B, au moins deux crochets 137 ;147 disposés sur les deux bords longitudinaux 138 ;148 parallèles de ladite demi-coque 130A,130B ;140A,140B pour faire saillie vers le logement intérieur 131 ;141 de l'accessoire d'angle plat 130 ou de l'accessoire d'angle intérieur ou extérieur 140, les deux crochets 137 ;147 d'une des demi-coques 130A ;140A étant décalés axialement (selon la ligne X1 ou selon la ligne X2) par rapport aux deux crochets 137 ;147 de l'autre demi-coque 130B ;140B.

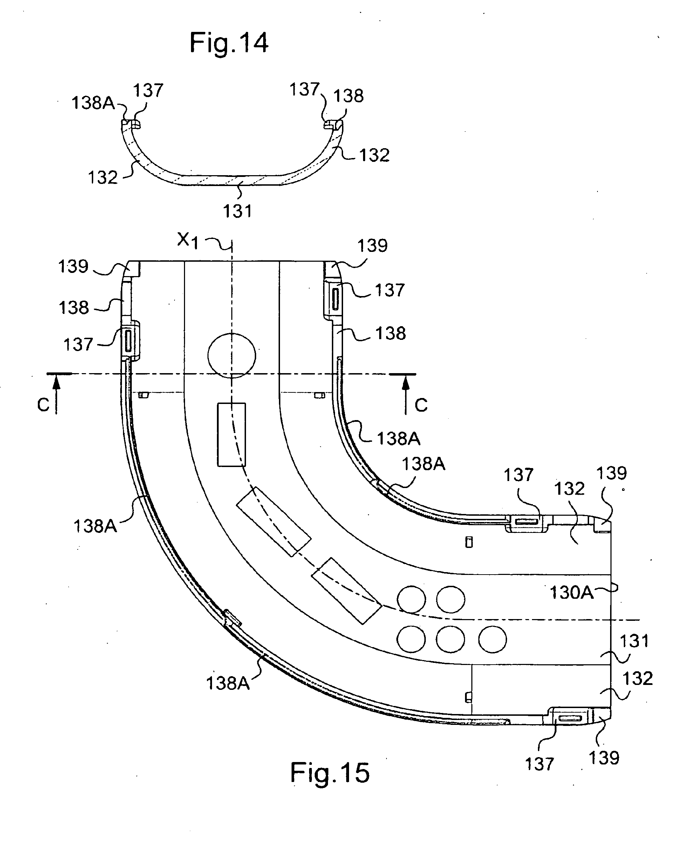

Chaque demi-coque 130A,130B ;140A,140B comporte deux paires de crochets 137 ;147, les deux crochets 137 ;147 de chaque paire disposés sur les deux bords longitudinaux 138 ;148 parallèles étant décalés axialement (selon la ligne X1 ou selon la ligne X2) l'un par rapport à l'autre (voir figures 15 et 17).

Ces crochets 137 ;147 sont conformés pour s'accrocher dans les rainures longitudinales 16 parallèles prévues en renfoncement sur la face externe 12A des socles 12 des conduits 10 de cheminement de câbles juxtaposés.

Les crochets 137 ;147 s'étendent globalement en équerre par rapport aux parois latérales 132 ;142 des demi-coques 130A,130B ;140A,140B.

En outre, chaque demi-coque 130A,130B ;140A ;140B comporte sur chaque bord longitudinal 138 ;148, entre deux crochets 137 ;147, au moins une nervure longitudinale 138A ;148A, chaque nervure longitudinale 138A ;148A d'une demi-coque 130A ;140A étant destinée à venir se positionner contre une nervure longitudinale 138A ;148A de l'autre demi-coque 130B ;140B.

Les nervures longitudinales 138A ;148A s'étendent en hauteur dans le prolongement des parois latérales 132 ;142 des demi-coques 130A,130B ;140A,140B.

Plus particulièrement, ici, chaque demi-coque 130A,130B ;140A ;140B comporte sur chaque bord longitudinal 138 ;148 entre deux crochets 137 ;147, deux nervures longitudinales 138A ;148A mises bout à bout et décalées latéralement l'une par rapport à l'autre. Lorsque les deux demi-coques 130A,130B ;140A ;140B sont positionnées l'une contre l'autre et accrochées aux socles 12 des conduits 10 en angle, les nervures longitudinales 138A ;148A des deux demi-coques se superposent pour former un joint étanche.

Par ailleurs, chaque demi-coque 130A,130B ;140A ;140B comporte à chaque extrémité sur deux bords longitudinaux 138 ;148 deux dents 139 ;149 en vis-à-vis destinées à s'accrocher dans les rainures longitudinales 16 parallèles prévues en renfoncement de la face externe 12A du socle 12 de chaque conduit 10. Ces dents 139 ;149 permettent de renforcer l'accrochage des demi-coques 130A,130B ;140A ;140B sur les socles 12 des conduits 10.

Les demi-coques 110A,110B ; 120A,120B ; 130A,130B ; 140A,140B de chaque accessoire décrit ci-dessus sont formées d'une seule pièce par moulage d'une matière plastique. Ainsi en sortie de moule, les demi-coques de chaque accessoire sont attachées l'une à l'autre par deux liens (référencés 145 sur les figures 16 et 17) cassables ou détachables.

Avec le mode de réalisation préféré du conduit 10 représenté sur les figures 1,2 et 3, il est possible, après retrait de la demi-coque formant couvercle de l'accessoire de raccordement monté à son extrémité coupée, d'ouvrir le couvercle 17 pour y ajouter des câbles ou conducteurs électriques non pas par tirage mais par dépose comme avec une moulure.

La présente invention n'est nullement limitée aux modes de réalisation décrits et représentés, mais l'homme du métier saura y apporter toute variante conforme aux revendications.

Par exemple, selon une variante de l'invention, on pourra prévoir de réaliser le conduit de manière monobloc, circulaire ou non.

## Revendications

1. Accessoire de raccordement (100) à rapporter sur une extrémité d'au moins un conduit (10), comportant deux demi-coques (110A,110B) délimitant intérieurement un logement, les parois (111,112) des deux demi-coques étant adaptées à sensiblement s'appliquer sur la face externe de l'extrémité coupée de chaque conduit en l'entourant complètement, **caractérisé en ce que** chacune des deux demi-coques (110A,110B) comporte des moyens de montage (117) pour être montée sur ledit conduit (10) indépendamment de l'autre demi-coque.

2. Accessoire de raccordement selon la revendication 1, **caractérisé en ce que** lesdits moyens de montage comprennent sur chaque demi-coque (110A,110B) au moins deux crochets (117) disposés sur au moins deux bords longitudinaux (118) de ladite demi-coque (110A,110B) pour faire saillie dans ledit logement, les deux crochets (117) d'une des demi-coques (110A) étant décalés axialement par rapport aux deux crochets (117) de l'autre demi-coque (110B).

3. Accessoire de raccordement selon l'une des revendications précédentes, **caractérisé en ce que** chaque demi-coque (110A,110B) comporte au moins deux paires de crochets (117), les deux crochets (117) de chaque paire disposés sur deux bords longitudinaux (118) ou deux parties de bord longitudinal parallèles étant décalés axialement l'un par rapport à l'autre.

4. Accessoire de raccordement selon l'une des deux revendications précédentes, **caractérisé en ce que** lesdits crochets (117) sont conformés pour s'accrocher dans des rainures longitudinales (16) parallèles prévues en renfoncement de la face externe (12A) du socle ( 12) du conduit (10).

5. Accessoire de raccordement selon l'une des revendications précédentes, **caractérisé en ce que** chaque demi-coque (110A,110B) comporte sur chaque bord longitudinal (118), entre deux crochets (117), au moins une nervure longitudinale (118A), chaque nervure longitudinale (118A) d'une demi-coque (110A) étant destinée à venir se positionner contre une nervure longitudinale (118A) de l'autre demi-coque (110B).

6. Accessoire de raccordement selon la revendication précédente, **caractérisé en ce que** chaque demi-coque (110A,110B) comporte sur chaque bord longitudinal (118), entre deux crochets (117), deux nervures longitudinales (118A) mises bout à bout et décalées latéralement l'une par rapport à l'autre.

7. Accessoire de raccordement selon l'une des revendications précédentes, **caractérisé en ce que** chaque demi-coque (110A,110B) comporte à chaque extrémité sur deux bords longitudinaux (118) deux dents (119) en vis-à-vis destinées à s'accrocher dans des rainures longitudinales parallèles prévues en renfoncement de la face externe du socle du conduit.

8. Accessoire de raccordement selon l'une des revendications précédentes, **caractérisé en ce que** les deux demi-coques (110A ;110B) sont identiques.

9. Accessoire de raccordement selon l'une des revendications précédentes, **caractérisé en ce que** chaque demi-coque (110A ;110B) comporte un fond (111) plat à partir duquel s'élèvent deux ailes latérales (112) courbes qui portent en tête lesdits moyens de montage.

10. Accessoire de raccordement selon l'une des revendications précédentes, **caractérisé en ce qu'**il constitue un accessoire de jonction (110) avec deux extrémités ouvertes opposées dont les sections s'étendent dans des plans parallèles.

11. Accessoire de raccordement selon l'une des revendications 1 à 9, **caractérisé en ce qu'**il constitue un accessoire de dérivation (120) avec trois extrémités ouvertes disposées en triangle.

12. Accessoire de raccordement selon l'une des revendications 1 à 9, **caractérisé en ce qu'**il constitue un accessoire d'angle intérieur ou d'angle extérieur (140) ou d'angle plat (130) avec deux extrémités ouvertes opposées dont les sections s'étendent dans des plans formant un angle entre eux.

13. Ensemble comportant un accessoire de raccordement selon l'une des revendications précédentes et un conduit (10) comprenant un socle (12) dont la face externe (12A) comprend des moyens de réception (16) desdits moyens de montage.

14. Ensemble selon la revendication précédente, **caractérisé en ce que** le socle (12) du conduit (10) comporte des rainures longitudinales (16) parallèles prévues en renfoncement de sa face externe (12A) dans lesquelles s'accrochent des crochets prévus sur les bords longitudinaux des demi-coques.

15. Ensemble selon l'une des revendications 13 ou 14, **caractérisé en ce qu'**il comporte au moins un accessoire de fixation (30) dudit conduit (10) sur une paroi adapté à placer ledit conduit à distance de ladite paroi.

16. Ensemble selon la revendication précédente, **caractérisé en ce que** ledit accessoire de fixation comporte une face avant (30A) qui forme un berceau de réception du socle (12) du conduit (10).

17. Ensemble selon la revendication précédente, **caractérisé en ce que** ce berceau de réception comporte un fond (31) plat recevant le fond (13) plat du socle (12) du conduit (10), bordé par deux parois latérales (32) légèrement courbes qui reçoivent les ailes latérales (14) courbes du socle (12) du conduit (10).

18. Ensemble selon la revendication précédente, **caractérisé en ce qu'**en tête, les deux parois latérales (32) de l'accessoire de fixation (30) comprennent des retours (34) dirigés l'un vers l'autre qui forment des dents d'accrochage destinées à s'accrocher dans des rainures longitudinales (16) prévues sur la face externe (12A) du socle (12) du conduit (10) pour maintenir celui-ci dans le berceau de réception de l'accessoire de fixation (30).

19. Ensemble selon l'une des revendications 16 à 18, **caractérisé en ce que** le fond (31) plat du berceau de réception de l'accessoire de fixation est percé d'orifices (33) traversants pour le passage de vis de fixation.

## Claims

1. A connection accessory (100) for fitting on an end of at least one piece of trunking (10) and comprising two half-shells (110A, 110B) that internally define a housing, the walls (111, 112) of the two half-shells being adapted to press substantially against the outer face of the cut end of each piece of trunking, surrounding it completely, said connection accessory being **characterized in that** each of the two half-shells (110A, 110B) includes mounting means (117) for mounting on said piece(s) of trunking (10) independently of the other half-shell.

2. A connection accessory according to claim 1, **characterized in that**, on each half-shell (110A, 110B), said mounting means comprise at least two hooks (117) that are arranged on at least two longitudinal edges (118) of said half-shell (110A, 110B) so as to project into said housing, the two hooks (117) of one of the half-shells (110A) being offset axially relative to the two hooks (117) of the other half-shell (110B).

3. A connection accessory according to either preceding claim, **characterized in that** each half-shell (110A, 110B) includes at least two pairs of hooks (117), the two hooks (117) of each pair, arranged on two parallel longitudinal edges (118) or two parallel longitudinal edge portions, being offset axially relative to each other.

4. A connection accessory according to any preceding claim, **characterized in that**, said hooks (117) are shaped so as to catch in parallel longitudinal grooves (16) provided as indentations in the outer face (12A) of the base (12) of the piece of trunking (10).

5. A connection accessory according to any preceding claim, **characterized in that**, on each longitudinal edge (118), each half-shell (110A, 110B) includes, between two hooks (117), at least one longitudinal rib (118A), each longitudinal rib (118A) of one half-shell (110A) being for coming into position against a respective longitudinal rib (118A) of the other half-shell (110B).

6. A connection accessory according to the preceding claim, **characterized in that**, on each longitudinal edge (118), each half-shell (110A, 110B) includes, between two hooks (117), two longitudinal ribs (118A) that are positioned end to end and offset laterally relative to each other.

7. A connection accessory according to any preceding claim, **characterized in that**, at each end, on two longitudinal edges (118), each half-shell (110A, 110B) includes two facing teeth (119) for catching in parallel longitudinal grooves provided as indentations in the outer face of the base of the piece of trunking.

8. A connection accessory according to any preceding claim, **characterized in that** the two half-shells (110A, 110B) are identical.

9. A connection accessory according to any preceding claim, **characterized in that** each half-shell (110A, 110B) includes a flat bottom wall (111) from which there project two curved side wings (112), the tops of which carry said mounting means.

10. A connection accessory according to any preceding claim, **characterized in that** it constitutes a junction accessory (110) with two opposite open ends having sections that extend in parallel planes.

11. A connection accessory according to any one of claims 1 to 9, **characterized in that** it constitutes a branch connection accessory (120) with three open ends arranged in a triangle configuration.

12. A connection accessory according to any one of claims 1 to 9, **characterized in that** it constitutes an internal-angle or external-angle accessory (140) or a flat angle accessory (130), with two opposite open ends having sections that extend in planes that form an angle between them.

13. A kit comprising a connection accessory according to any preceding claim, and a piece of trunking (10) including a base (12) having an outer face (12A) that includes reception means (16) for receiving said mounting means.

14. A kit according to the preceding claim, **characterized in that** the base (12) of the piece of trunking (10) includes parallel longitudinal grooves (16) provided as indentations in its outer face (12A) and in which hooks provided on the longitudinal edges of the half-shells catch.

15. A kit according to claim 13 or claim 14, **characterized in that** it includes at least one fastener accessory (30) for fastening said piece of trunking (10) to a wall, said fastener accessory being adapted to position said piece of trunking at a distance from said wall.

16. A kit according to the preceding claim, **characterized in that** said fastener accessory includes a front face (30A) that forms a reception cradle for receiving the base (12) of the piece of trunking (10).

17. A kit according to the preceding claim, **characterized in that** the reception cradle includes a flat bottom wall (31) for receiving the flat bottom wall (13) of the base (12) of the piece of trunking (10), said reception cradle being bordered by two slightly-curved side walls (32) that receive the curved side wings (14) of the base (12) of the piece of trunking (10).

18. A kit according to the preceding claim, **characterized in that** the tops of the two side walls (32) of the fastener accessory (30) include rims (34) that are directed towards each other and that form fastener teeth for catching in longitudinal grooves (16) provided on the outer face (12A) of the base (12) of the piece of trunking (10) so as to hold said piece of trunking in the reception cradle of the fastener accessory (30).

19. A kit according to any one of claims 16 to 18, **characterized in that** the flat bottom wall (31) of the reception cradle of the fastener accessory is perforated with through orifices (33) through which fastener screws pass.

## Patentansprüche

1. An einem Ende von mindestens einem Kabelkanal (10) anzubringendes Anschlusszubehör (100) mit zwei Halbschalen (110A, 110B), die in ihrem Innenraum eine Aufnahme abgrenzen, wobei sich die Wände (111, 112) der beiden Halbschalen dazu eignen, leicht auf der Außenseite des abgeschnittenen Endes jedes Kabelkanals aufzuliegen und diesen völlig umgeben, **dadurch gekennzeichnet, dass** jede der beiden Halbschalen (110A, 110B) Montagemittel (117) umfasst, um unabhängig voneinander auf dem Kabelkanal (10) montiert zu werden.

2. Anschlusszubehör nach Anspruch 1, **dadurch gekennzeichnet, dass** die Montagemittel auf jeder Halbschale (110A, 110B) mindestens zwei Haken (117) umfassen, die mindestens auf zwei Längsrändern (118) der Halbschale (110A, 110B) angebracht sind, um in die Aufnahme vorzustehen, wobei die beiden Haken (117) einer der Halbschalen (110A) in Bezug zu den beiden Haken (117) der anderen Halbschale (110B) achsenmäßig versetzt sind.

3. Anschlusszubehör nach einem der vorausgehenden Ansprüche, **dadurch gekennzeichnet, dass** jede Halbschale (110A, 110B) mindestens zwei Hakenpaare (117) umfasst, wobei die beiden Haken (117) jedes Paars an zwei parallelen Längsrändern (118) oder zwei parallelen Abschnitten der Längsränder angebracht sind und achsenmäßig zueinander versetzt sind.

4. Anschlusszubehör nach einem der beiden vorausgehenden Ansprüche, **dadurch gekennzeichnet, dass** die Haken (117) passend sind, um sich in parallelen Längsrillen (16) einzuhaken, die als Vertiefung der Außenseite (12A) des Sockels (12) des Kabelkanals (10) vorgesehen sind.

5. Anschlusszubehör nach einem der vorausgehenden Ansprüche, **dadurch gekennzeichnet, dass** jede Halbschale (110A, 110B) an jedem Längsrand (118) zwischen zwei Haken (117) mindestens eine Längsrippe (118A) besitzt, wobei jede Längsrippe (118A) einer Halbschale (110A) dazu bestimmt ist, sich an einer Längsrippe (118A) der anderen Halbschale (110B) anliegend zu positionieren.

6. Anschlusszubehör nach dem vorausgehenden Anspruch, **dadurch gekennzeichnet, dass** jede Halbschale (110A, 110B) an jedem Längsrand (118) zwischen zwei Haken (117) zwei aneinandergefügte Längsrippen (118A) besitzt, die seitlich zueinander versetzt sind.

7. Anschlusszubehör nach einem der vorausgehenden Ansprüche, **dadurch gekennzeichnet, dass** jede Halbschale (110A, 110B) an jedem Ende an zwei Längsrändern (118) zwei gegenüberliegende Zähne (119) aufweist, die dazu bestimmt sind, sich in parallelen Längsrillen einzuhängen, die als Vertiefung der Außenseite des Kabelkanalsockels vorgesehen sind.

8. Anschlusszubehör nach einem der vorausgehenden Ansprüche, **dadurch gekennzeichnet, dass** die beiden Halbschalen (110A, 110B) identisch sind.

9. Anschlusszubehör nach einem der vorausgehenden Ansprüche, **dadurch gekennzeichnet, dass** jede Halbschale (110A, 110B) einen flachen Boden (111) hat, von dem aus sich zwei gewölbte Seitenflügel (112) erstrecken, die an ihrer Spitze die Montagemittel tragen.

10. Anschlusszubehör nach einem der vorausgehenden Ansprüche, **dadurch gekennzeichnet, dass** es ein Verbindungszubehör (110) mit zwei entgegengesetzten offenen Enden bildet, deren Querschnitte sich in parallelen Ebenen erstrecken.

11. Anschlusszubehör nach einem der Ansprüche 1 bis 9, **dadurch gekennzeichnet, dass** es ein Abzweigungszubehör (120) mit drei als Dreieck angeordneten offenen Enden bildet.

12. Anschlusszubehör nach einem der Ansprüche 1 bis 9, **dadurch gekennzeichnet, dass** es ein Innen- oder Außen- (140) bzw. Flachwinkel-Zubehör (130) mit zwei entgegengesetzten offenen Enden bildet, deren Querschnitte sich in Ebenen erstrecken, die einen Winkel zueinander bilden.

13. Einheit mit einem Anschlusszubehör nach einem der vorausgehenen Ansprüche und einem Kabelkanal (10) mit einem Sockel (12), dessen Außenseite (12A) Aufnahmemittel (16) für die Montagemittel umfasst.

14. Einheit nach vorausgehendem Anspruch, **dadurch gekennzeichnet, dass** der Sockel (12) des Kabelkanals (10) parallele Längsrillen (16) umfasst, die als Vertiefung seiner Außenseite (12A) vorgesehen sind, in denen sich die an den Längsrändern der Halbschalen vorgesehenen Haken einhängen.

15. Einheit nach einem der Ansprüche 13 oder 14, **dadurch gekennzeichnet, dass** sie mindestens ein Zubehör (30) für die Befestigung des Kabelkanals (10) an einer Wand umfasst, das sich dazu eignet, den Kabelkanal im Abstand zur Wand anzuordnen.

16. Einheit nach vorausgehendem Anspruch, **dadurch gekennzeichnet, dass** das Befestigungszubehör eine Vorderseite (30A) umfasst, die für den Sockel (12) des Kabelkanals (10) eine Einschubaufnahme bildet.

17. Einheit nach vorausgehendem Anspruch, **dadurch gekennzeichnet, dass** diese Einschubaufnahme einen flachen Boden (31) umfasst, der den flachen Boden (13) des Sockels (12) des Kabelkanals (10) aufnimmt, der von zwei leicht gewölbten Seitenwänden (32) umgeben ist, die die gewölbten Seitenflügel (14) des Sockels (12) des Kabelkanals (10) aufnehmen.

18. Einheit nach vorausgehendem Anspruch, **dadurch gekennzeichnet, dass** die beiden Seitenwände (32) des Befestigungszubehörs (30) an der Spitze zueinander gerichtete Rückführungen (34) umfassen, die Einhängezähne bilden, die dazu bestimmt sind, sich in an der Außenseite (12A) des Sockels (12) des Kabelkanals (10) vorgesehene Längsrillen (16) einzuhängen, um den Kabelkanal in der Einschubaufnahme des Befestigungszubehörs (30) zu halten.

19. Einheit nach einem der Ansprüche 16 bis 18, **dadurch gekennzeichnet, dass** der flache Boden (31) der Einschubaufnahme des Befestigungszubehörs von durchgehenden Öffnungen (33) für den Durchgang von Befestigungsschrauben durchbohrt ist.
